# EUROPEAN PATENT SPECIFICATION

(11) **EP 3 181 976 B1**
(45) Date of publication and mention of the grant of the patent: **06.02.2019**
(21) Application number: 15200732.4
(22) Date of filing: 17.12.2015
(51) Int. Cl.: F16L 27/02, F16L 27/04, F16L 27/11, F16L 5/02

(54) **ROTARY JOINT FOR CONNECTING HYDRAULIC PIPES AND HYDRAULIC PIPING WITH ROTARY JOINTS**
DREHBARE VERBINDUNG ZUM ANSCHLIESSEN VON HYDRAULIKROHREN UND HYDRAULISCHE ROHRLEITUNG MIT DREHGELENKEN
JOINT ROTATIF PERMETTANT DE RACCORDER DES CONDUITES HYDRAULIQUES ET UNE TUYAUTERIE HYDRAULIQUE AVEC DES JOINTS ROTATIFS

(43) Date of publication of application: 21.06.2017
(73) Proprietor: Airbus Operations GmbH, 21129 Hamburg (DE)
(72) Inventor: Benthien, Hermann, 21129 Hamburg (DE); Lungmuß, Julian, 28199 Bremen (DE)
(74) Representative: Isarpatent

(56) References cited:
- EP-A1- 0 718 537
- DE-A1- 3 733 237
- DE-U- 1 836 067
- FR-A- 608 847
- FR-A1- 3 015 624
- US-A- 3 233 921

## Description

The present invention pertains to a rotary joint for connecting hydraulic pipes and to hydraulic piping utilizing such rotary joints. The present invention particularly pertains to rotary joints for connecting hydraulic pipes within an aircraft or spacecraft.

Although generally applicable to any kind of hydraulic piping, e.g. for use in the transport industry in landborne, airborne, or waterborne vehicles, the present invention and the problem on which it is based will be explained in greater detail with reference to water piping for use in commercial aircraft. In principle, however, the present invention may also be utilized in other pipe systems that are configured for transportation of various fluids like oil, fuel, water or the like. Further, the present invention may be used in various parts of aircraft, like for example aircrafts passenger cabins, floors, wings, cargo bays etc.

In contemporary commercial aircraft a plurality of water pipes, tubes and/or conduits are used for applications like waste water transportation, cargo drainage, or humidifier piping. These pipes may form complex piping networks and are often formed from stainless steel or titanium parts that are connected by various fluid transport elements, like welded elbows and T-pieces or the like. The assembly process of such systems often has to take place with little space for maneuvering. For example, due to given space constraints and installation requirements or needs, several pipes may be provided at different distances to each other. To connect these pipes with each other, rigid adapters may be utilized, which often are standardized components that may be limited with respect to tolerance compensation, e.g. because they may only provide tolerance compensation into an axial direction. For example, document US 5330237 A discloses a pipe joint for a hydraulic pipe that is able to absorb vibrations of the connected pipe. In some cases, the pipes are simply crimped onto the adapter. For better controlled tolerances, customized and more accurate components may replace these adapters on the expense of higher costs. Alternatively, components may be post-processed, which takes time and may also not be particularly cost efficient.

In aircraft construction, pipes are often connected with so-called pipe clamps. To this end, pipes may be formed with flanges at their respective axial ends that are mounted within the pipe clamps and are being pressed against each other by the pipe clamp with or without a sealing positioned in between. The clamp itself hereby ensures that the pipe parts stay tight together. Additional flexibility may be achieved by employing pipe bellows or more general expansion joints. Expansion joints fabricated from elastomers, rubber, fabrics with metallic reinforcements and/or metal parts may be designed to provide stress relief in piping systems due to thermal changes, vibrations, pressure thrust and other mechanical influences. These components may to some extend realize rotary freedom of movement in between the pipes.

Prior art documents EP 0 718 537 A1, DE 18 36 067 U, US 3 233 921 A, FR 608 847 A and FR 3 015 624 A1 disclose flexible pipe connections. Prior art document DE 37 33 237 A1 describes water- and gas-tight outer casing ducts through the masonry of house walls.

It is one object of the present invention to provide simple solutions for connecting hydraulic pipes with high flexibility and improved tolerance compensation.

This object is achieved by a hydraulic piping having the features of claim 1.

According to the invention, a hdraulic piping for an aircraft or spacecraft is provided, wherein a hydraulic pipe is connected to a pipe connection element with a rotary joint. The rotary joint comprises a first annular socket flange having a partly spheroid first concave bearing surface; a first annular ball flange having a partly spheroid first convex bearing surface, wherein the curvature of the first concave bearing surface of the first annular socket flange corresponds to the curvature of the first convex bearing surface of the first annular ball flange, wherein the first annular socket flange or the first annular ball flange embraces an outer pipe wall of the hydraulic pipe to be in mechanical connection with the hydraulic pipe, and wherein the respective other of the first annular socket flange and the first annular ball flange is formed at the pipe connection element; a union nut; a second annular socket flange having a partly spheroid second concave bearing surface being concentric to the first concave bearing surface; and a second annular ball flange having a partly spheroid second convex bearing surface being concentric to the first convex bearing surface, wherein the curvature of the second concave bearing surface of the second annular socket flange corresponds to the curvature of the second convex bearing surface of the second annular ball flange, and wherein the second annular socket flange or the second annular ball flange is formed around the union nut, and wherein the respective other of the second annular socket flange and the second annular ball flange is formed at the pipe connection element. The first annular socket flange or the first annular ball flange embracing the outer pipe wall of the hydraulic pipe comprises a sheath around the outer pipe wall of the hydraulic pipe. The union nut is screwed onto the sheath.

One idea of the present invention is to improve the connections points within a piping system made up of pipes and/or pipe segments on the one side and pipe connection elements, like pipe adapters, pipe brackets, pipe bearings, sockets etc. on the other side. For this purpose, rotary joints inspired by a ball-and-socket type design are employed. One connection part of each such rotary joint is formed by an annular ball flange that has a partly spheroid convex outer surface, i.e. the outer surface of the ball flange is formed as a ring-like segment of a spherical surface. The other connection part of the joint is formed by a annular socket flange that has a partly spheroid concave outer surface. The concave outer surface of the concave connection part principally corresponds to the shape of the convex outer surface of the convex connection part so that both connection parts may be brought in contact with each other and the touching convex and concave outer surface may move in a sliding manner with respect to each other, similar to a ball-and-socket connection. This enables the implementation of a smooth contact between the two parts, thereby reducing the inner friction within the joint. One of the connection parts may serve as a stationary connection part that may be mounted to a pipe bracket, adapter and so on for providing support to the joint, while the other connection part may serve as a movable connection part that may be mounted to and/or may be in contact with a pipe or pipe segment.

Due to the ball-and-socket principle, the rotary joint according to the invention is able to provide connection points between pipes and stationary parts of a structure with improved tolerance compensation with high flexibility of the attachment. The rotary joint corrects offset tolerances into radial directions with respect to a longitudinal pipe axis as well as angular displacements, i.e. rotary degrees of freedom. Along the contacting surfaces of the stationary connection part and the movable connection part a swivelling motion of the pipe attached to the movable connection part with respect to the attached structure of the stationary connection part may be realized. A lateral moment on the pipe coupled to the movable connection part with respect to the contacting surfaces of the rotary joint will lead to a shifting movement of the socket flange along the outer surface of the stationary connection part. Thus, any bending moment acting perpendicular to the orientation of the pipe will vanish with respect to the rotary joint due to the compensating sliding movement of the movable connection part with respect to the stationary connection part. This means in turn that the rotary joint will be essentially free of any bending moments that would otherwise be brought into the rotary joint. In a similar vein also rotations may be compensated in between the movable connection part and the stationary connection part. Hence, the rotary joint may be balanced out under any loading situation in an optimal way. The system according to the invention is simple and may be assembled in a straightforward and quick way thereby keeping installation costs low. Furthermore, the system according to the invention is easy to maintain and the connection elements may be quickly replaced in case of a damage and/or for maintenance.

Hydraulic pipes within the meaning of the invention comprise pipes, pipe segments, tubes and/or conduits that are used for transportation of various fluids like water, oil, fuel, or the like and may be employed for applications like waste water transportation, cargo drainage, or humidifier piping and so on.

Advantageous embodiments and improvements of the present invention are found in the subordinate claims.

According to examples, the first annular socket flange or the first annular ball flange may be formed around a fluid pipe-port of a hydraulic pipe. The opening within the first annular socket flange or the first annular ball flange thus may serve as a fluid port of the hydraulic pipe. This part of the rotary joint may then for example serve as a movable connection part, while the other part of the joint may be mounted to a stationary part of a structure, e.g. to a primary structure or to a cabin structure of an aircraft or spacecraft.

For example, the first annular socket flange or the first annular ball flange may be integrally formed with the hydraulic pipe. The pipe itself (together with the flange) may be formed from metal, plastic, ceramic and/or combinations of these materials. In one example, the first annular socket flange or the first annular ball flange may be integrally formed together with the hydraulic pipe using an additive manufacturing (AM) or 3D printing technique. Using 3D printing processes even complexly structured joint parts and pipes may be manufactured as integral plastic or metal objects in cost and time efficient production manner. Components according to the present invention can either replace and/or complement various conventional joints and pipes or conduits, e.g. standard metal pipes or the like. Plastic pipes may be manufactured in a fully rigid way similar to metal pipes. Hence, piping dimensions and routes may be well defined in compliance with safety regulations (e.g. minimal distances to other aircraft components).

3D-printing generally refers to generating three-dimensional objects based on digital model data by creating a cross-sectional pattern of the object to be formed and forming the three-dimensional solid object by sequentially building up layers of material. Such AM or 3D printing techniques usually include selectively depositing material layer by layer, selectively fusing or solidifying the material and removing excess material, if needed. 3D printing is currently used for prototyping and distributed manufacturing with multiple applications in engineering, construction, industrial design, automotive industries and aerospace industries. In general, the solution of the invention offers great advantages for 3D printing or AM technology since 3D components may be printed without the additional need for subjecting the components or objects to further processing steps such as milling, cutting or drilling. This allows for a more efficient, material saving and time saving manufacturing process. Particularly advantageous in general is the reduction of costs, weight, lead time, part count and manufacturing complexity coming along with employing AM technology for printing rotary joint, pipes or other objects used for, employed in or being part of airborne vehicles. Moreover, the geometric shape of the printed components or objects may be flexibly designed with regard to the intended technical purpose of parts or regions of the component/object.

The respective other of the first annular socket flange and the first annular ball flange may be formed around a fluid connector-port of a pipe connection element. The opening within the first annular socket flange or the first annular ball flange thus may serve as a fluid port of the pipe connection element. Principally, the respective flange may be integrally formed together with the pipe connection element. In one example, the first annular socket flange may be formed around a fluid pipe-port of a hydraulic pipe. Further, the first annular ball flange may be formed around a fluid connector-port of a pipe connection element. In another example, the first annular ball flange may be formed around a fluid pipe-port of a hydraulic pipe, while the first annular socket flange may be formed around a fluid connector-port of a pipe connection element. In both cases, the pipe connection element may be, for example, a pipe bracket that laterally couples the thus connected pipe to a stationary structure, e.g. a structure of an aircraft or spacecraft.

The pipe connection element may comprise at least one of a pipe adapter, a pipe bracket and a pipe bearing or similar. The person of skill will readily acknowledge that many different arrangements and configurations of the rotary joint according to the invention may be advantageous depending on the specific application and the technical field. The pipe connection element may thus be configured as a pipe adapter to couple two or more pipes or pipe segments. Alternatively or additionally, the pipe connection element may comprise a pipe bracket for providing a stable and rigid connection of the pipe(s) or pipe segment(s) to a stationary structure or the like. For example, the pipe connection element may comprise a pipe adapter and a pipe bracket, both of which are coupled together. The pipe adapter may couple one pipe (segment) to another pipe (segment) via the rotary joint. The pipe bracket then may couple the complete setup to a stationary structure. Furthermore, the pipe connection element may comprises a pipe bearing that for example may couple a pipe or pipe segment via the rotary joint to a fluid port within a structure or similar. However, the person of skill will be aware that the rotary joint according to the invention may equally well be used to couple pipes with other components known in the field of hydraulic piping, e.g. bellows and/or expansion joints. To this end, the first annular socket flange or the first annular ball flange may be formed at the respective component, while the respective other of the first annular socket flange or the first annular ball flange may be formed at a pipe or pipe segment.

According to examples, the rotary joint may further comprise a sealing bellows connecting the hydraulic pipe and the pipe connection element. The sealing bellows may be formed as an assembly of generally more than one convolute in series that surround the rotary joint and seal it from the outside. The convolutes may be designed strong enough to withstand an internal pressure of the system, at the same time the contour of the convolute assembly may be flexible under thermal or other movement of the connected piping. The sealing bellows may be formed from metal, plastic, e.g. a polymer, a rubber or the like, a composite material, combinations of these or any other suitable material known to the person of skill.

The sealing bellows may seal the hydraulic pipe and the pipe connection element in a liquid-tight manner. This advantageously secures that no liquid can escape from the rotary joint.

The sealing bellows may be formed from metal. The sealing bellows may further be welded to the hydraulic pipe and the pipe connection element.

According to the invention, the first annular socket flange or the first annular ball flange embraces an outer pipe wall of a hydraulic pipe to be in mechanical connection with the hydraulic pipe. The respective other of the first annular socket flange and the first annular ball flange is formed at a pipe connection element. The movable connection part may not necessarily be formed together with the pipe or pipe segment, but may only be in mechanical contact with the pipe. For example, the movable connection part may be formed as a slider or sleeve that may be slipped over the pipe. The movable connection part may be fixed at the pipe, e.g. by welding, or it may be slidably interlocked with the pipe. The respective other flange may be (integrally) formed with the pipe connection element. However, the stationary flange may not be formed at a fluid port of the pipe connection element. For example, the pipe connection element may be a pipe bracket with a circular opening that is formed on one side by the first annular socket flange. The annular ball flange may be welded to the outer pipe wall of the hydraulic pipe and the hydraulic pipe may be inserted through the circular opening of the pipe bracket such that the annular ball flange of the hydraulic pipe is in sliding contact with the annular socket flange of the pipe connection element. The diameter of the annular socket flange, that is the diameter of the opening of the pipe bracket, may be larger than the diameter of the outer pipe wall of the hydraulic pipe such that the hydraulic pipe may be swiveled out of an orientation into axial direction of the circular opening of the pipe bracket by a certain swivelling angle by sliding the first convex bearing surface of the first annular ball flange against the first concave bearing surface of the first annular socket flange.

The first annular socket flange or the first annular ball flange embracing the outer pipe wall of the hydraulic pipe may be attached to the outer pipe wall of the hydraulic pipe.

The first annular socket flange or the first annular ball flange embracing the outer pipe wall of the hydraulic pipe may be welded to the outer pipe wall of the hydraulic pipe.

According to the invention, the rotary joint further comprises a union nut. The rotary joint further comprises a second annular socket flange having a partly spheroid second concave bearing surface being concentric to the first concave bearing surface. The rotary joint further comprises a second annular ball flange having a partly spheroid second convex bearing surface being concentric to the first convex bearing surface. The curvature of the second annular socket flange corresponds to the curvature of the second convex bearing surface of the second annular ball flange. The second annular socket flange or the second annular ball flange is formed around the union nut. The respective other of the second annular socket flange and the second annular ball flange is formed at the pipe connection element. As in the example from above, the pipe connection element may be a pipe bracket with a circular opening that is formed on a first side by the first annular socket flange. The annular ball flange may be welded to the outer pipe wall of the hydraulic pipe and the hydraulic pipe may be inserted through the circular opening of the pipe bracket such that the annular ball flange of the hydraulic pipe is in sliding contact with the annular socket flange of the pipe connection element. The diameter of the annular socket flange, that is the diameter of the opening of the pipe bracket, may be larger than the diameter of the outer pipe wall of the hydraulic pipe such that the hydraulic pipe may be swiveled out of an orientation into axial direction of the circular opening of the pipe bracket by a certain swivelling angle by sliding the first convex bearing surface of the first annular ball flange against the first concave bearing surface of the first annular socket flange. To provide a fixation of the setup to the pipe bracket into axial direction, the union nut is provided on a second side of the opening of the pipe bracket opposite to the first side. For example, the first annular ball flange may be configured with a sheath, onto which the union nut is screwed to fix the pipe together with the first annular ball flange to the pipe bracket into an axial direction. The union nut may be formed with a second annular socket flange, which then forms a second "sliding surface" together with a second annular ball flange of the pipe bracket. A "first sliding" surface is situated on the other side of the circular opening of the pipe bracket and is formed by the first annular socket flange formed at the pipe bracket and the first annular ball flange being attached to the hydraulic pipe. As a result, a rotary joint is formed in between a pipe bracket and a hydraulic pipe, wherein the hydraulic pipe is mounted to the pipe bracket in a swivable and rotatable way for providing flexibility and optimal tolerance compensation.

According to the invention, the first annular socket flange or the first annular ball flange embracing the outer pipe wall of the hydraulic pipe comprises a sheath around the outer pipe wall of the hydraulic pipe. The union nut is screwed onto the sheath.

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. In the figures, like reference numerals denote like or functionally like components, unless indicated otherwise.
Fig. 1 schematically illustrates a cross-sectional view of a rotary joint according to an example.
Fig. 2 schematically illustrates a cross-sectional view of a rotary joint according to another example.
Fig. 3 schematically illustrates a cross-sectional view of a rotary joint according to yet another example.
Fig. 4 schematically illustrates a cross-sectional view of a rotary joint according to yet another example.
Fig. 5 schematically illustrates a cross-sectional view of a rotary joint according to yet another example.
Fig. 6 schematically illustrates a cross-sectional view of a rotary joint according to yet another example.
Fig. 7 schematically illustrates a cross-sectional view of two rotary joints according to other examples.
Fig. 8 schematically illustrates a cross-sectional view of two rotary joints according to other examples.
Fig. 9 schematically illustrates a cross-sectional view of a rotary joint according to an embodiment of the invention.
Fig. 10 schematically illustrates a cross-sectional view of two rotary joints according to another embodiment of the invention.

Although specific embodiments are illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

Some of the components, elements and assemblies as disclosed herein forth may be fabricated using free form fabrication (FFF), direct manufacturing (DM), fused deposition modelling (FDM), powder bed printing (PBP), laminated object manufacturing (LOM), stereolithography (SL), selective laser sintering (SLS), selective laser melting (SLM), selective heat sintering (SHS), electron beam melting (EBM), direct ink writing (DIW), digital light processing (DLP) and/or additive layer manufacturing (AM). Those techniques belong to a general hierarchy of additive manufacturing (AM) methods. Often termed as 3D printing, those systems are used for generating three-dimensional objects by creating a cross-sectional pattern of the object to be formed and forming the three-dimensional solid object by sequentially building up layers of material. Any of such procedures will be referred to in the following description as AM or 3D printing without loss of generality. AM or 3D printing techniques usually include selectively depositing material layer by layer, selectively fusing or solidifying the material and removing excess material, if needed.

3D or AM techniques may be used in procedures for building up three-dimensional solid objects based on digital model data. 3D/AM employs an additive process where layers of material are sequentially built up in different shapes. 3D/AM is currently used for prototyping and distributed manufacturing with multiple applications in engineering, construction, industrial design, automotive industries and aerospace industries.

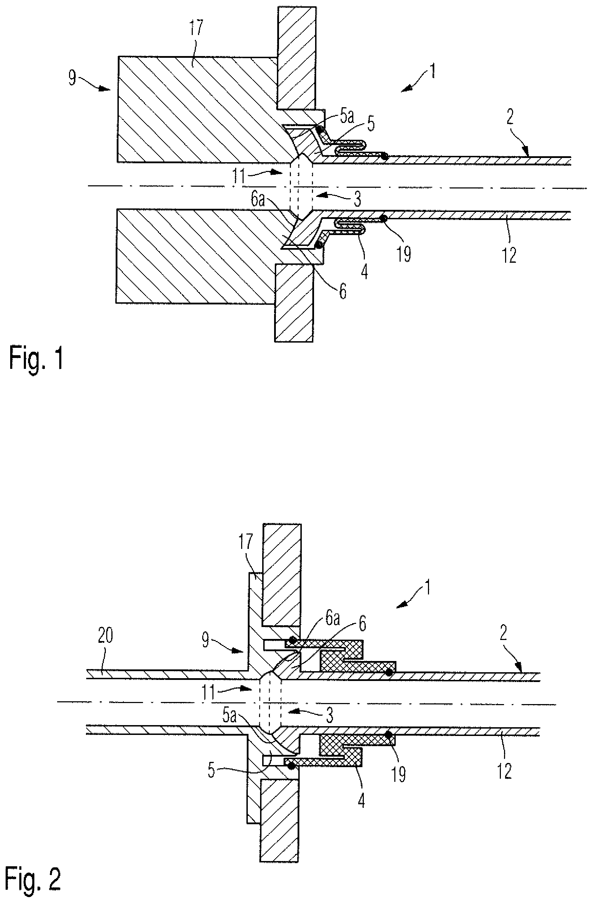

Fig. 1 schematically illustrates a cross-sectional view of a rotary joint according to an example.

In Fig. 1 reference sign 1 denotes a rotary joint. The rotary joint 1 may be used in applications of hydraulic piping, in which hydraulic pipes, pipe segments, tubes and/or general conduits for transportation of fluids have to be connected to each other and to be mounted to stationary components or structures. Rotary joints 1 as disclosed herein may be used for example in the transport industry in landborne, airborne, or waterborne vehicles. The disclosed rotary joints 1 provide a high level of flexibility and improved tolerance compensation for connecting hydraulic pipes to each other and to stationary structures. These rotary joints 1 particularly provide various advantages in applications where strict space constraints and weight requirements as well as high mechanical loads pose significant demands on the technical design of a hydraulic piping system. The present rotary joints 1 may be particularly useful in various parts of aircraft, like for example aircrafts passenger cabins, floors, wings, cargo bays etc. for transportation of various fluids like water, oil, fuel or the like. However, rotary joints 1 as disclosed in the following exemplary examples may equally well be employed in other technical fields, like construction, building design, civil engineering and so on.

The rotary joint 1 depicted in Fig. 1 connects a hydraulic pipe 2 with a pipe bearing 17 situated within a pipe connection element 9. The pipe bearing 17 may for example be mounted to a wall, floor or ceiling of a structure, e.g. of a passenger aircraft, and may be configured to provide a fluid communication in between the hydraulic pipe 2 and a waste water or fuel system of the aircraft (not depicted). The hydraulic pipe 2 may be a rigid plastic, metal, ceramic, and/or fiber-composite component formed as one integral piece, e.g. from thermoplastics or the like. The hydraulic pipe 2 comprises a single outer pipe wall 12 shaped in the form of a hollow circular cylinder. However, the person of skill will readily acknowledge that this simple pipe configuration is chosen for exemplary purposes only and that various different and more complex pipe geometries and configurations are possible. For example, the hydraulic pipe 2 may equally well be configured as a double-walled pipe, e.g. with integrated heating capabilities or similar, to be utilized within a waste water transportation piping system of a commercial airplane. Thus, it will be clear for the person of skill that the depicted hydraulic pipe 2 is of exemplary nature and many other configurations, shapes, dimensions and arrangements of the hydraulic pipe 2 and its parts are possible. The hydraulic pipe 2 may have a different general shape. Depending on the use case at hand, the person skilled in the art will be able to implement an optimal configuration for the given situation.

The hydraulic pipe 2, the rotary joint 1, the pipe connection element 9 and/or their respective (sub-)components may be manufactured from metal or plastic using an additive manufacturing or 3D printing method. As these methods allow to produce even complex rigid integral objects from various distinct materials, like for example different metals and/or synthetic polymers, these components may replace conventional piping made from metals or metal alloys, like stainless steel or titanium. However, the components depicted in Fig. 1 way equally well be manufactured with other common methods on a metal or metal alloy basis.

The rotary joint 1 comprises a first annular socket flange 5 having a partly spheroid first concave bearing surface 5a, which is formed around a fluid pipe-port 3 of the hydraulic pipe 2. The term concave implies that the bearing surface 5a has a curvature where the radius of the curvature lies outside the hydraulic pipe 2. Further, the rotary joint 1 comprises a first annular ball flange 6 having a partly spheroid first convex bearing surface 6a, which is formed around a fluid connector-port 11 of the pipe connection element 9. The term convex implies that the bearing surface 6a has a curvature where the radius of the curvature lies inside the pipe connection element 9. The curvature of the first concave bearing surface 5a of the first annular socket flange 5 corresponds to the curvature of the first convex bearing surface 6a of the first annular ball flange 6, so that a smooth contacting area between the first annular socket flange 5 and first annular ball flange 6 is guaranteed. The first annular socket flange 5 and the first annular ball flange 6 thus are in sliding contact with each other such that a sliding rotational or swivelling motion with respect to each other is possible. Hence, the hydraulic pipe 2 may be for example swivelled out of a baseline axial orientation generally perpendicular to the pipe bearing 17 by a swivelling angle. Additionally or alternatively, the hydraulic pipe 2 may be rotated within the rotary joint 1 around its longitudinal axis. Due to these degrees of freedom the depicted joint system achieves a very high level of flexibility and adaptability to compensate any stress put on the hydraulic pipe 2 or the system in general due to mechanical influences, thermal changes, pressure thrust and so on. The depicted rotary joint 1 is able to divert torsional moments acting on the hydraulic pipe 2 lateral to their main axis. Since the hydraulic pipe 2 is able to swerve or give way along the contacting surface 5a and 6a of the ball-and-socket inspired bearing, this rotation and/or swivelling motion of the hydraulic pipe 2 will always be able to compensate for any lateral moments acting on the hydraulic pipe 2. Hence, no net moment on the rotary joint 1 is created as a whole. As a consequence, the rotary joint 1 is free from torsional stress, leading to greater mechanical stability and compensating any tolerances. The rotary joint 1 as explained above is a cheap, extremely light and flexible system that allows for rapid construction and deconstruction of multiple structures of varying outer profile.

The rotary joint 1 in Fig. 1 further comprises a sealing bellows 4 connecting the hydraulic pipe 2 and the pipe connection element 9. The sealing bellows 4 is formed as an assembly of a multitude of convolutes in series that surround the rotary joint 1 and seal it from the outside. The sealing bellows 4 in this particular example is formed from metal and is welded to the hydraulic pipe 2 and the pipe connection element 9 at several welding points 19. Due to this, the sealing bellows 4 seals the hydraulic pipe 2 and the pipe connection element 9, that is the rotary joint 1, in a liquid-tight manner. Thus, no liquid can escape from the rotary joint 1 through gaps or slits in between the pipe connection element 9 and the hydraulic pipe 2.

Figs. 2 to 8 schematically illustrate cross-sectional views of rotary joints 1 according to further examples, all of which represent possible variations of the rotary joint 1 of Fig. 1.

Fig. 2 shows a rotary joint 1, which similarly to the rotary joint 1 in Fig. 1 comprises a first annular socket flange 5 having a partly spheroid first concave bearing surface 5a and a first annular ball flange 6 having a partly spheroid first convex bearing surface 6a. However, in this example the first annular socket flange 5 is formed around a fluid connector-port 11 of the pipe connection element 9, while the first annular ball flange 6 is formed around a fluid pipe-port 3 of the hydraulic pipe 2. This example of the rotary joint 1 features similar advantageous as the one depicted in Fig. 1. In contrast to Fig. 1, the pipe connection element 9 is connected to a counter pipe 20 on a side facing away from the rotary joint 1 (left of Fig. 2) such that the hydraulic pipe 2 and the counter pipe 20 are in fluid communication with each other.

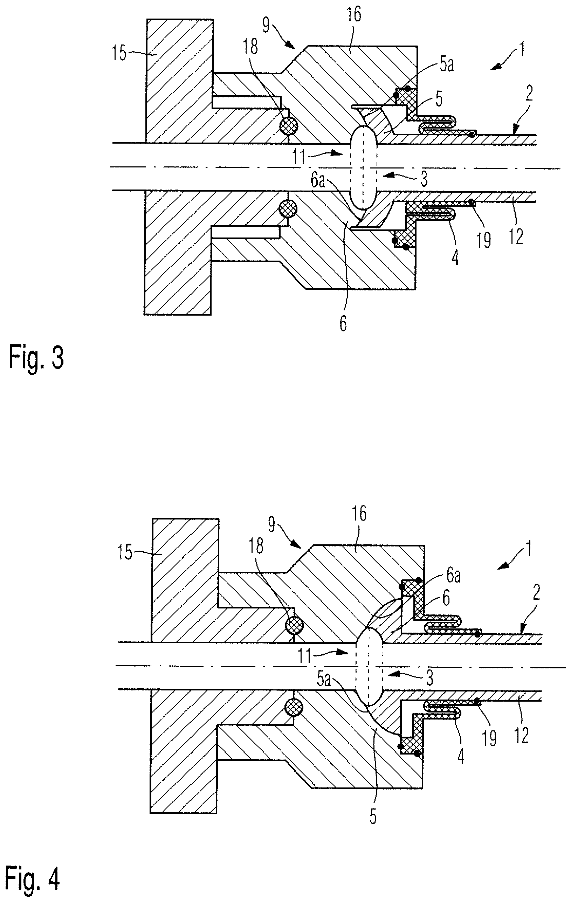

Figs. 3 and 4 show similar rotary joints 1, wherein the pipe connection element 9 comprises a pipe bracket 15 and a pipe adapter 16. In Fig. 3 the first annular ball flange 6 is formed at the pipe adapter 16, while in Fig. 4 the first annular socket flange 5 is formed at the pipe adapter 16. In both cases, the pipe adapter 16 is attached to the pipe bracket 15, e.g. it may be screwed or pushed onto the pipe bracket 15. The pipe bracket 15 herein provides the attachment to a stationary structure or lateral support (not shown). In between the pipe adapter 16 and the pipe bracket 15 a sealing 18 is provided to seal both components in a liquid-tight manner against each other. The hydraulic pipe 2 may be an elongated pipe. However in alternative examples, the hydraulic pipe 2 may be formed as a short pipe segment with a fitting (not shown) attached to the end facing away from the rotary joint 1 so that hoses or other pipes or pipe segments may be attached to this end.

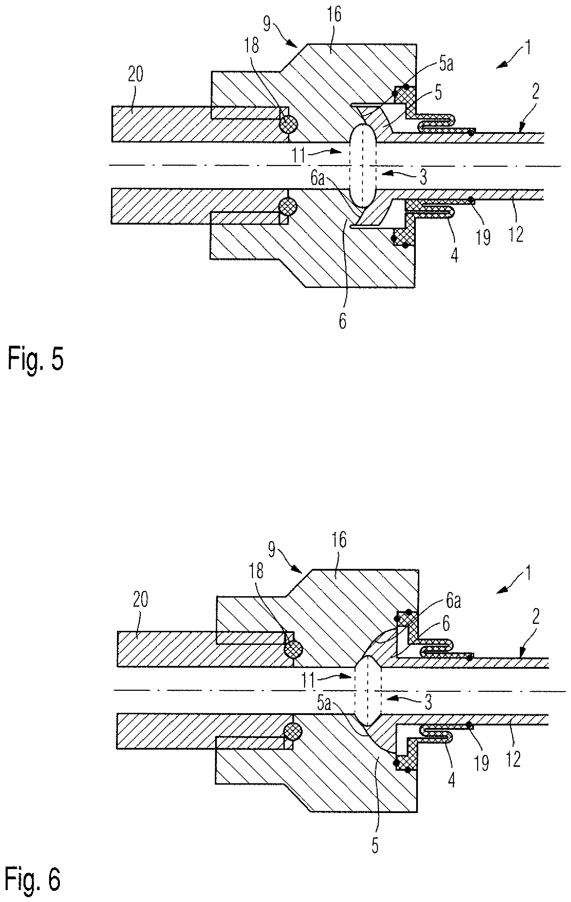

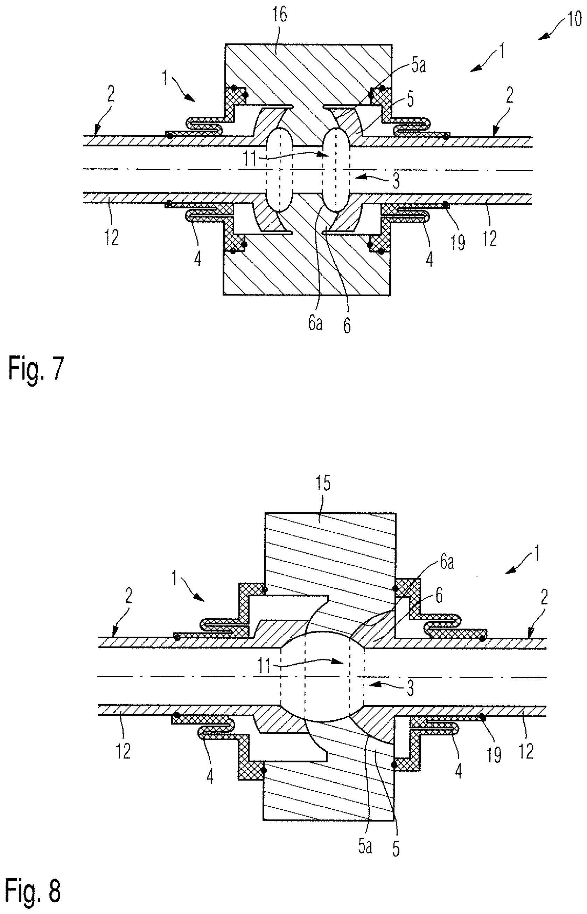

Figs. 5 and 6 show alternative examples of Figs. 3 and 4, wherein the pipe adapter 16 is screwed or plugged onto a counter pipe 20. In this case a sealing 18 is provided in between the pipe adapter 16 and the counter pipe 20. The counter pipe 20 itself may be similarly formed and configured as the hydraulic pipe 2. In contrast to the hydraulic pipe 2 however it is not mounted to the pipe adapter 16 with a rotary joint 1 according to the present invention. Fig. 7 however depicts an example, wherein two rotary joints 1 are provided that connect two hydraulic pipes 2 with each other via a pipe adapter 16 in between. The example in Fig. 8 is connecting two hydraulic pipes 2 in a similar vein via a pipe bracket 15 in between. Hence, also in case of Fig. 8 two rotary joints 1 are provided. The two rotary joints 1 may be configured and arranged similarly or differently. The example of Fig. 8 for example features one hydraulic pipe 2 with an annular ball flange 6 (right side of Fig. 8) and one hydraulic pipe 2 with an annular socket flange 5 (left side of Fig. 8). The pipe bracket 15 consequently features one annular socket flange 5 as well as one annular ball flange 6.

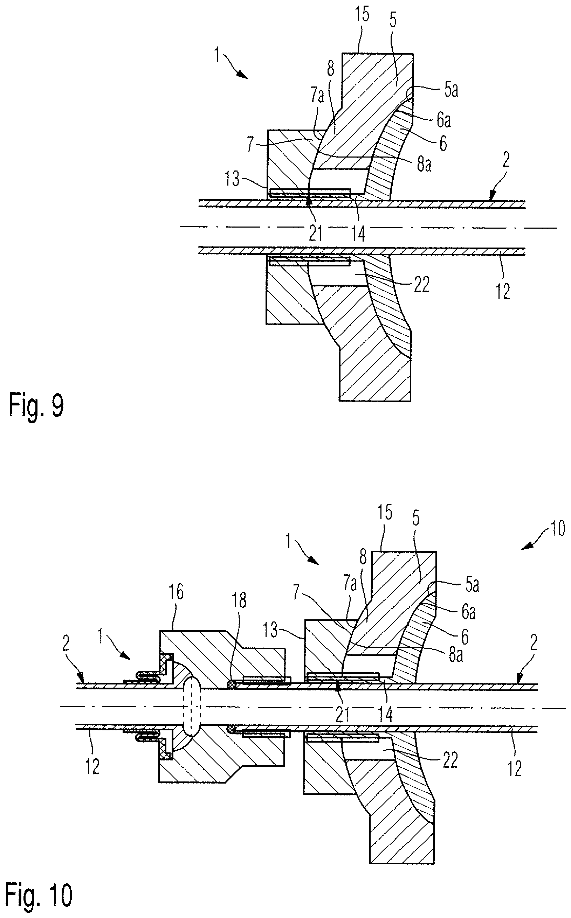

Fig. 9 schematically illustrates a cross-sectional view of a rotary joint 1 according to an embodiment of the invention. The rotary joint 1 comprises a first annular socket flange 5 having a partly spheroid first concave bearing surface 5a. The first annular socket flange 5 is formed at a pipe connection element 9, which is configured as a pipe bracket 15. The pipe bracket 15 is formed with a circular opening 22. Further, the rotary joint 1 comprises a first annular ball flange 6 having a partly spheroid first convex bearing surface 6a. The first annular ball flange 6 embraces an outer pipe wall 12 of a hydraulic pipe 2 such that it is in direct mechanical connection with the hydraulic pipe 2. The hydraulic pipe 2 is inserted through the circular opening 22 of the pipe bracket 15, wherein a diameter of the circular opening 22 of the pipe bracket is formed larger than the diameter of the outer pipe wall 12 of the hydraulic pipe 2. The curvature of the first concave bearing surface 5a of the first annular socket flange 5 corresponds to the curvature of the first convex bearing surface 6a of the first annular ball flange 6, so that a smooth contacting area between the first annular socket flange 5 and first annular ball flange 6 is guaranteed. The first annular socket flange 5 and the first annular ball flange 6 thus are in sliding contact with each other such that a sliding rotational or swivelling motion with respect to each other is possible.

The first annular ball flange 6 embracing the outer pipe wall 12 of the hydraulic pipe 2 may be welded or otherwise attached to the outer pipe wall 12 of the hydraulic pipe 2. However, in particularly simple embodiments, the first annular ball flange 6 may alternatively embrace the outer pipe wall 12 of the hydraulic pipe 2 in a sliding manner, so that the hydraulic pipe 2 may be moved in and out of the rotary joint 1 arrangement. The first annular ball flange 6 embracing the outer pipe wall 12 of the hydraulic pipe 2 comprises a sheath 14 around the outer pipe wall 12 of the hydraulic pipe 2.

The rotary joint 1 in Fig. 9 further comprises a union nut 13 that is screwed onto the sheath 14 of the first annular ball flange 6. For this purpose, a screw thread 21 is provided at the sheath 14 of the first annular ball flange 6.

The rotary joint 1 further comprises a second annular socket flange 7 having a partly spheroid second concave bearing surface 7a being concentric to the first concave bearing surface 5a. The second annular socket flange 7 is formed around the union nut 13. In addition, the rotary joint 1 comprises a second annular ball flange 8 having a partly spheroid second convex bearing surface 8a being concentric to the first convex bearing surface 6a. The second annular ball flange 8 is formed at the pipe connection element 9. The curvature of the second concave bearing surface 7a of the second annular socket flange 7 corresponds to the curvature of the second convex bearing surface 8a of the second annular ball flange 8. Hence, not only the first annular socket flange 5 and the first annular ball flange 6 are in sliding contact with each other such that a sliding rotational and/or swivelling motion with respect to each other is possible, but also the second annular socket flange 7 and the second annular ball flange 8 are in sliding contact with each other. Due to the connection between the union nut 13 and the sheath 14 of the first annular ball flange 6, a joint sliding rotational and/or swivelling motion is achieved. In effect, the hydraulic pipe 2 is mounted to the rotary joint 1 in such a way that it may swivel and/or rotate within the rotary joint 1, i.e. within the circular opening in the pipe bracket 15. Thus, a hydraulic pipe 2 may be mounted with a high flexibility and automatic tolerance compensation.

Fig. 10 schematically illustrates a cross-sectional view of two rotary joints 1 according to another embodiment of the invention. Fig. 10 basically shows a part of a hydraulic piping 10, which comprises two hydraulic pipes 2 that are connected to each other via two rotary joints 1. The rotary joint 1 on the left-hand side of Fig. 10 corresponds to the example shown in Fig. 6, while the rotary joint 1 on the righthand side of Fig. 10 corresponds to the embodiment shown in Fig. 9. Principally, complex hydraulic piping 10 systems may be arranged and built by using a plurality of rotary joints 1 according to the invention. In another embodiment, the righthand side hydraulic pipe 2 may again also be connected to a pipe adapter 16 on the other end in a similar vein as in the left-hand side of Fig. 10.

In the foregoing detailed description, various features are grouped together in one or more examples or examples with the purpose of streamlining the disclosure. It is to be understood that the above description is intended to be illustrative, and not restrictive.

Many other examples will be apparent to one skilled in the art upon reviewing the above specification.

The embodiments were chosen and described in order to best explain the principles of the invention and its practical applications, to thereby enable others skilled in the art to best utilize the invention and various embodiments with various modifications as are suited to the particular use contemplated. Many other examples will be apparent to one skilled in the art upon reviewing the above specification.

### List of reference signs

- 1: rotary joint
- 2: hydraulic pipe
- 3: fluid pipe-port
- 4: sealing bellows
- 5: first annular socket flange
- 5a: first concave bearing surface
- 6: first annular ball flange
- 6a: first convex bearing surface
- 7: second annular socket flange
- 7a: second concave bearing surface
- 8: second annular ball flange
- 8a: second convex bearing surface
- 9: pipe connection element
- 10: piping
- 11: fluid connector-port
- 12: outer pipe wall
- 13: union nut
- 14: sheath
- 15: pipe bracket
- 16: pipe adapter
- 17: pipe bearing
- 18: sealing
- 19: welding point
- 20: counter pipe
- 21: screw thread

## Claims

1. Hydraulic piping (10) for an aircraft or spacecraft, wherein a hydraulic pipe (2) is connected to a pipe connection element (9) with a rotary joint (1), the rotary joint (1) comprising:
a first annular socket flange (5) having a partly spheroid first concave bearing surface (5a);
a first annular ball flange (6) having a partly spheroid first convex bearing surface (6a), wherein the curvature of the first concave bearing surface (5a) of the first annular socket flange (5) corresponds to the curvature of the first convex bearing surface (6a) of the first annular ball flange (6), wherein the first annular socket flange (5) or the first annular ball flange (6) embraces an outer pipe wall (12) of the hydraulic pipe (2) to be in mechanical connection with the hydraulic pipe (2), and wherein the respective other of the first annular socket flange (5) and the first annular ball flange (6) is formed at the pipe connection element (9);
a union nut (13);
a second annular socket flange (7) having a partly spheroid second concave bearing surface (7a) being concentric to the first concave bearing surface (5a); and
a second annular ball flange (8) having a partly spheroid second convex bearing surface (8a) being concentric to the first convex bearing surface (6a), wherein the curvature of the second concave bearing surface (7a) of the second annular socket flange (7) corresponds to the curvature of the second convex bearing surface (8a) of the second annular ball flange (8), and wherein the second annular socket flange (7) or the second annular ball flange (8) is formed around the union nut (13), and wherein the respective other of the second annular socket flange (7) and the second annular ball flange (8) is formed at the pipe connection element (9);
wherein the first annular socket flange (5) or the first annular ball flange (6) embracing the outer pipe wall (12) of the hydraulic pipe (2) comprises a sheath (14) around the outer pipe wall (12) of the hydraulic pipe (2), and
wherein the union nut (13) is screwed onto the sheath (14).

2. Hydraulic piping (10) according to claim 1, wherein the first annular socket flange (5) or the first annular ball flange (6) embracing the outer pipe wall (12) of the hydraulic pipe (2) is attached to the outer pipe wall (12) of the hydraulic pipe (2).

3. Hydraulic piping (10) according to claim 2, wherein the first annular socket flange (5) or the first annular ball flange (6) embracing the outer pipe wall (12) of the hydraulic pipe (2) is welded to the outer pipe wall (12) of the hydraulic pipe (2).

## Patentansprüche

1. Hydraulikrohrleitungen (10) für ein Luft- oder Raumfahrzeug, wobei ein hydraulisches Rohr (2) mit einem Rohrverbindungselement (9) mit einem Drehgelenk (1) verbunden ist, wobei das Drehgelenk (1) Folgendes umschließt:
einen ersten ringförmigen Sockelflansch (5) mit einer teilweise kugelförmigen ersten konkaven Auflagefläche (5a);
einen ersten ringförmigen Kugelflansch (6) mit einer teilweise kugelförmigen ersten konvexen Auflagefläche (6a), wobei die Krümmung der ersten konkaven Auflagefläche (5a) des ersten ringförmigen Sockelflanschs (5) der Krümmung der ersten konvexen Auflagefläche (6a) des ersten ringförmigen Kugelflanschs (6) entspricht, wobei der erste ringförmige Sockelflansch (5) oder der erste ringförmige Kugelflansch (6) eine äußere Rohrwand (12) des hydraulischen Rohrs (2) umschließt, um in mechanischer Verbindung mit dem hydraulischen Rohr (2) zu stehen, und wobei der jeweils andere des ersten ringförmigen Sockelflanschs (5) und des ersten ringförmigen Kugelflanschs (6) am Rohrverbindungselement (9) ausgebildet ist;
eine Überwurfmutter (13);
einen zweiten ringförmigen Sockelflansch (7) mit einer teilweise kugelförmigen zweiten konkaven Auflagefläche (7a), die konzentrisch zur ersten konkaven Auflagefläche (5a) ist; und
einen zweiten ringförmigen Kugelflansch (8) mit einer teilweise kugelförmigen zweiten konvexen Auflagefläche (8a), die konzentrisch zur ersten konvexen Auflagefläche (6a) ist, wobei die Krümmung der zweiten konkaven Auflagefläche (7a) des zweiten ringförmigen Sockelflanschs (7) der Krümmung der zweiten konvexen Auflagefläche (8a) des zweiten ringförmigen Kugelflanschs (8) entspricht und wobei der zweite ringförmige Sockelflansch (7) oder der zweite ringförmige Kugelflansch (8) um die Überwurfmutter (13) ausgebildet ist und wobei der jeweils andere des zweiten ringförmigen Sockelflanschs (7) und des zweiten ringförmigen Kugelflanschs (8) am Rohrverbindungselement (9) ausgebildet ist;
wobei der erste ringförmige Sockelflansch (5) bzw. der erste ringförmige Kugelflansch (6), der die äußere Rohrwand (12) des hydraulischen Rohrs (2) umschließt, eine Hülle (14) um die äußere Rohrwand (12) des hydraulischen Rohrs (2) umschließt und wobei die Überwurfmutter (13) auf die Hülle (14) aufgeschraubt ist.

2. Hydraulikrohrleitungen (10) nach Anspruch 1, wobei der erste ringförmige Sockelflansch (5) bzw. der erste ringförmige Kugelflansch (6), der die äußere Rohrwand (12) des hydraulischen Rohrs (2) umschließt, an der äußeren Rohrwand (12) des hydraulischen Rohrs (2) befestigt ist.

3. Hydraulikrohrleitungen (10) nach Anspruch 2, wobei der erste ringförmige Sockelflansch (5) bzw. der erste ringförmige Kugelflansch (6), der die äußere Rohrwand (12) des hydraulischen Rohrs (2) umschließt, an die äußere Rohrwand (12) des hydraulischen Rohrs (2) geschweißt ist.

## Revendications

1. Tuyauterie hydraulique (10) pour aéronef ou engin spatial, dans laquelle une conduite hydraulique (2) est raccordée à un élément de raccordement (9) de tuyau par une articulation simple (1), l'articulation simple (1) comprenant :
une première collerette rotulaire (5) annulaire comportant une première surface d'appui concave (5a) partiellement sphéroïdale ;
une première bride rotulaire (6) annulaire comportant une première surface d'appui convexe (6a) partiellement sphéroïdale,
dans laquelle la courbure de la première surface d'appui concave (5a) de la première collerette rotulaire (5) annulaire correspond à la courbure de la première surface d'appui convexe (6a) de la première bride rotulaire (6) annulaire,
dans laquelle la première collerette rotulaire (5) annulaire ou la première bride rotulaire (6) annulaire enserre la paroi extérieure (12) de tuyau de la conduite hydraulique (2) pour être en liaison mécanique avec la conduite hydraulique (2), et
dans laquelle l'autre composant parmi la première collerette rotulaire (5) annulaire et la première bride rotulaire (6) annulaire est formée au niveau de l'élément de raccordement (9) de tuyau ;
un écrou-union (13) ;
une seconde collerette rotulaire (7) annulaire comportant une seconde surface d'appui concave (7a) partiellement sphéroïdale qui est concentrique à la première surface d'appui concave (5a) ; et
une seconde bride rotulaire (8) annulaire comportant une seconde surface d'appui convexe (8a) partiellement sphéroïdale qui est concentrique à la première surface d'appui convexe (6a),
dans laquelle la courbure de la seconde surface d'appui concave (7a) de la seconde collerette rotulaire (7) annulaire correspond à la courbure de la seconde surface d'appui convexe (8a) de la seconde bride rotulaire (8) annulaire ;
dans laquelle la seconde collerette rotulaire (7) annulaire ou la seconde bride rotulaire (8) annulaire est formée autour de l'écrou-union (13) ;
dans laquelle l'autre composant parmi la seconde collerette rotulaire (7) annulaire et la seconde bride rotulaire (8) annulaire est formée au niveau de l'élément de raccordement (9) de tuyau ;
dans laquelle la première collerette rotulaire (5) annulaire ou la première bride rotulaire (6) annulaire enserrant la paroi extérieure (12) de tuyau de la conduite hydraulique (2) comprend une gaine (14) autour de la paroi extérieure (12) de tuyau de la conduite hydraulique (2) ; et
dans laquelle l'écrou-union (13) est vissé sur la gaine (14).

2. Tuyauterie hydraulique (10) selon la revendication 1, dans laquelle la première collerette rotulaire (5) annulaire ou la première bride rotulaire (6) annulaire enserrant la paroi extérieure (12) de tuyau de la conduite hydraulique (2) est fixée à la paroi extérieure (12) de tuyau de la conduite hydraulique (2).

3. Tuyauterie hydraulique (10) selon la revendication 2, dans laquelle la première collerette rotulaire (5) annulaire ou la première bride rotulaire (6) annulaire enserrant la paroi extérieure (12) de tuyau de la conduite hydraulique (2) est soudée à la paroi extérieure (12) de tuyau de la conduite hydraulique (2).
